# EUROPEAN PATENT SPECIFICATION

(11) **EP 1 948 964 B1**
(45) Date of publication and mention of the grant of the patent: **27.05.2009**
(21) Application number: 05813687.0
(22) Date of filing: 02.11.2005
(51) Int. Cl.: F16H 7/12

(54) **BELT TENSIONER FOR AN ACCESSORY DRIVE**
RIEMENSPANNER FÜR EINEN ZUSATZANTRIEB
TENDEUR DE COURROIE POUR UN ENTRAINEMENT D'ACCESSOIRES

(43) Date of publication of application: 30.07.2008
(73) Proprietor: Dayco Europe S.r.l. con Unico Socio, Frazione Chieti Scalo 66100 Chieti (IT)
(72) Inventor: ORSO, Giuseppe, I-10090 San Bernardo di Ivrea (IT)
(74) Representative: Jorio, Paolo
(86) International application number: PCT/IT2005/000628
(87) International publication number: WO 2007/052312

(56) References cited:
- US-A1- 2003 022 746
- US-A1- 2003 153 422
- US-B1- 6 231 645

## Description

### TECHNICAL FIELD

The present invention relates to a belt tensioner drive for actuating auxiliary members of an internal combustion engine, hereinafter for brevity 'accessory drive' .

### BACKGROUND ART

There are known tensioners for accessory drives comprising a fixed cup body defining an inner cavity, a tensioning arm hinged about an axis defined by a pin integral with the cup body, a pulley overhangingly supported by the tensioning arm and rotating about its own axis parallel to the axis of the arm, and a spring accommodated in the inner cavity and cooperating with the arm for tensioning the belt of the accessory drive.

The tensioner further comprises a radial supporting bushing interposed between the pin and the arm to facilitate the relative movement of the tensioning arm with respect to the pin, and a damping device comprising a friction plate rotationally integral with the base and biased by a Belleville spring against a friction surface of the tensioning arm. In this way, the vibrations are damped allowing a correct tensioning of the belt in dynamic conditions. Furthermore, the friction plate defines a supporting surface which defines the reference for the position of the arm and from which depends the parallelism between the rotation axis of the pulleys and that of the arm.

Indeed, the cylindrical bushing is fitted on the pin with a radial clearance needed for the assembly and a tilting torque, due to the fact that the idle pulley is overhanging, is relieved directly onto the friction plate without the intervention of the cylindrical bushing.

In operation, the friction plate tends to wear asymmetrically due to the tilting torque defining a progressive inclination of the arm. Such inclination causes on the cylindrical bushing small contact areas which tend to favour the wear of the bushing itself and to increase the inclination of the tensioning arm, an anomalous stress on the belt in dynamic conditions.

Furthermore, US-A-2003153422 discloses a tensioner according to the preamble of claim 1. However such tensioner does not provide means to properly recover axial play of the bushing caused by wearing.

### DISCLOSURE OF INVENTION

It is the object of the present invention to obtain a tensioner for an accessory drive free from the mentioned drawbacks.

The object of the present invention is achieved by a tensioner as defined in claim 1.

### BRIEF DESCRIPTION OF THE DRAWING

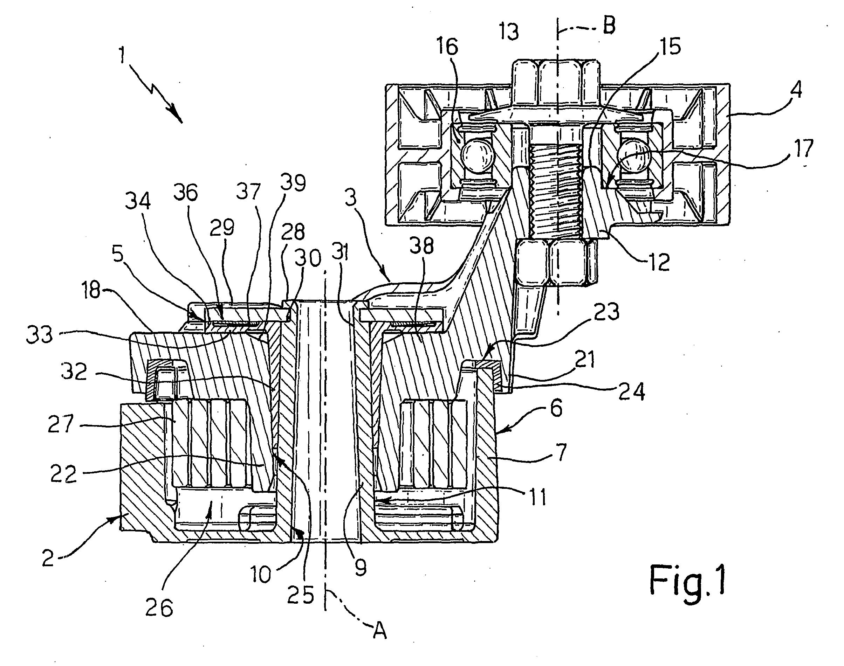

For a better understanding of the present invention, it will now be described a preferred embodiment only by way of non-limitative example, and with reference to the accompanying drawing, in which figure 1 is an axial section of a tensioner according to the present invention.

### BEST MODE FOR CARRYING OUT THE INVENTION

The tensioner 1 comprises a base 2 connected to a supporting wall (not shown) of an internal combustion engine of a motor vehicle, a tensioning arm 3 rotatably connected to the base 2 and overhangingly supporting an idle pulley 4 adapted to cooperate with the back of a belt of an accessory drive (not shown), and a damping device 5 interposed between the base 2 and the tensioning arm 3 to dampen the dynamic vibrations of the tensioner 1.

In particular, the base 2 comprises a cup body 6 laterally defined by a cylindrical wall 7, and a tubular pin 9 protruding from the centre of the cup body 6 and defining an axis A. The tubular pin 9 extends by an axial height upper with respect to that of the cylindrical wall 7 and defines a through hole 10 and a tapered surface 11 both coaxial to axis A.

The tensioning arm 3 pivots around the tubular pin 9 and comprises an end portion 12 connected to the idle pulley 4 by means of a screw 13.

The end portion 12 defines a cylindrical supporting element 15 having an axis B parallel to axis A and cooperating with a bearing 16 of the pulley 4. The supporting element 15 also presents a flat surface 17 perpendicular to the axis B and defining a reference plane for the bearing 16 when the screw 13 is fastened onto the tensioning arm 3.

On a longitudinally opposite part to the end portion 12, the tensioning arm 3 comprises an end portion 18 defining a cylindrical wall 21 protruding from the end portion 18 on the opposite part of the idle pulley 4 with respect to the tensioning arm 3, and a tubular element 22 concentric to the cylindrical wall 21 and defining a tapered seat 25.

The cylindrical wall 7 presents a diameter smaller than that of the cylindrical wall 21 and cooperates with the end portion 18 along a direction parallel to the axis A by means of a friction material ring 23 defining the axial support of the tensioning arm 3 on the base 2. The ring 23 presents a transversal L section having an edge 24 arranged in radial contact with the cylindrical walls 7, 21 to define a labyrinth seal.

Furthermore, the cylindrical walls 7, 21, the cup body 6 and the end portion 18 define a closed cavity 26 against the entrance of external agents by means of the edge 24 of the ring 23 and accommodating a spiral spring 27 to hold the tensioning arm 3 against the accessory drive belt.

Inside the cavity 26, the spring 27 is connected between the base 2 and the tensioning arm 3 and the tubular element 22 is radially guided by the tapered surface 11 of the tubular pin 9 by means of the damping device 5 which defines the radial centring of the tensioning arm 3 on the tubular pin 9.

In particular, along an axial direction, the device 5 is closed by a circular crown cover 29 rigidly connected to the tubular pin 9 by means of a riveting 28.

In particular, the cover 29 is riveted against a shoulder 30 formed on an end portion 31 of the tubular pin 9 arranged on the part axially opposite to the cup body 6.

The damping device 5 is made of self-lubricated friction material, for example Stanyl TW371 polymeric material marketed by DuPont, and integrally comprises a truncated cone bushing 32, which will hereinafter be called as 'tapered bushing' for brevity, a flexible circular crown wall 33 and a peripheral edge 34 protruding in axial relief with respect to the flexible wall 33 on the opposite side of the tapered bushing 32.

In particular, the tapered bushing 32 converges towards the base 2 and defines an axis of symmetry of the device 5 coinciding in use with axis A, and the flexible wall 33 protrudes radially from a larger base of the tapered bushing 32 in a direction perpendicular to the axis A.

The edge 34 is pressed by the cover 29 and defines with the flexible wall 33 a circular crown housing 36 for a Belleville spring 37 which axially biases the damping device 5 and cooperates with the cover 29.

Furthermore, it is envisaged a flaring 39 defining an undercut between a flat wall 38 carried by the end portion 18 perpendicularly to axis A and the tapered seat 25.

The tensioner 1 is preferably manufactured according to a method comprising a step of assembling the tensioning arm 3 on the base 2, a step of positioning the base 2 on a reference plane of a numeric control machine tool, a step of machining the supporting portion 15 and of the flat surface 17 with a tool having a rotation axis referred in a perpendicular direction to the reference plane and finally a step of assembling the bearing 16.

In this manner, a support portion 15 is obtained with the tolerance of the machine tool directly referred to the reference plane independently from the tolerance chains of the single components, that is of the tubular pin 9, of the tubular element 22 and of the tapered bushing 32.

Furthermore, the damping device 5 is manufactured by moulding and comprises a final step of reticulating the polymeric material inside the mould at a temperature comparable to the normal working temperature of the tensioner, preferably from 100° to 130°. In this way, the distortions created by the working temperature are reduced to the minimum allowing to further contain the parallelism tolerance.

In use, by the inclination angle of the tapered bushing 32, it is possible to recover the clearances also in a direction perpendicular to the axis A obtaining an operating condition with no clearance.

During assembly of the tensioner 1, the shoulder 30 avoids that the cover 29 is excessively pressed against the edge 34. A high friction, possibly caused by the excessive assembly pressure of the cover 29 on the edge 34 in the absence of the shoulder 30, could block the tensioning arm 3 and compromise the operation of the tensioner 1.

The axial action of the Belleville spring 37 maintains the cylindrical wall 21 in contact against the ring 23, the flexible wall 33 against the flat wall 38 and the tapered bushing 32 wedged between the tubular pin 9 and the tubular element 22, allowing in this manner to distribute the action of the tilting torque on numerous supporting surfaces and to decrease the specific pressure acting on each of them.

In the case of particular heavy stress during operation of the accessory drive, the damping device 5 tends to wear but the action of the Belleville spring 37 allows the tapered bushing 32 to progressively advance towards the cup portion 6 recovering the clearances which are maintained null for the entire working life of the tensioner 1. In particular, the axial feed of the tapered bushing 32 is possible thanks to the presence of the flaring 39 which allows a bending of the flexible wall 33 and thanks to the fact that the inner diameter of the Belleville spring 37 is lower than the external diameter of the flaring 39.

The advantages of the present tensioner are the following.

The use of the tapered bushing 32 to support the tensioning arm 3 on the base 2 allows to recover the radial clearances and to maintain large contact surfaces during the working life of the tensioner 1, thus containing the parallelism tolerances between pulley and supporting surface.

In order to further contain the parallelism tolerance, the flexible wall 33 and the ring 23 allow to reduce the overall wear by defining further supporting surfaces against the action of the tilting torque; the seat of the bearing 16 is obtained during the assembling step when the tensioning arm 3 is already fitted on the base 2 cancelling the effect on the machining tolerance chain of the components; and the damping device 5 is cooled inside the mould to contain the high temperature distortions.

Furthermore, the tapered bushing 32 defines a friction surface which generates a damping torque depending on the amplitude of the taper angle. Therefore, it is possible to accurately adjust the damping features by means of the geometry of the tapered bushing 32 and essentially independently from the friction material used. For example, the damping torque increases as the opening angle of the tapered bushing 32 decreases.

Furthermore, it is possible to integrate in a single element the damping and clearance recover functions and it is possible to avoid envisaging a separate damping element, for example a plate, reducing the number of components.

The presence of the shoulder 30 guarantees in a simple way obtaining a correct and repeatable damping value of tensioner 1.

It is finally apparent that changes and variations can be made to the tensioner here described and illustrated without departing from the scope of protection of the present invention, as defined in the accompanying claims.

For example, it is possible to envisage that the tapered bushing 32 presents a longitudinal groove defining an axial end portion having an open transversal section. In this manner, the end portion gives in the circumferential direction and allows the tapered bushing 32 to wedge itself more easily between the tubular pin 9 and the tubular element 22, thereby increasing friction.

It has also been verified that, in some applications in which the amplitude of the oscillations of the tensioning arm 3 is limited and the consumption of the tapered bushing 32 is reduced during the working life of the tensioner 1, the minimum pressure exerted by the cover 29 is sufficient to apply an axial preload which guarantees both to recover the radial clearances and to obtain the required damping torques.

In particular, an example of such application is the use of the tensioner 1 in a drive comprising a damper pulley assembly connected to a crankshaft of an internal combustion engine of the vehicle. In the present description and claims, it is intended with the expression 'damping pulley assembly' a pulley assembly comprising a hub keyed on the crankshaft, a seismic mass centrically connected to the hub by means of a first elastic or viscoelastic element for defining a dynamic damper of the crankshaft torsion vibrations, and a pulley connected to the hub by means of a second elastic or viscoelastic element for filtering the vibrations from the crankshaft.

Preferably, in order to particularly effectively reduce the stress peaks transmitted by the crankshaft to the accessory drive, the second elastic element is obtained by means of spiral springs preferably carried by the hub and radially forced against an inner cylindrical surface defined by the pulley, as shown in EP-A-1279807, to define a joint which, in the present description and in the claims, will be indicated with the expression 'spring overruning flexible joint'.

In use, a spring overruning flexible joint presents a decreasing stiffness when the pulley is rotated relatively to the hub in a first direction and allows the decoupling when the pulley rotates in a second direction opposite to the first direction and a torque threshold transmissible depending on the friction between the springs and the inner cylindrical surface is exceeded.

## Claims

1. A tensioner (1) for a belt drive, comprising a base (2) adapted to being supported on a supporting wall fixed to an internal combustion engine, a tensioning arm (3) rotatably connected to said base (2) and comprising a supporting portion (15) for an idle pulley (4) defining a second rotation axis (B) for said idle pulley (4), a pin (9) carried by one of said base (2) and tensioning arm (3) and defining a first axis (A) about which rotates said tensioning arm (3), and an elastic element (27) cooperating with said base (2) and with said tensioning arm (3) to tension a belt of said drive, a tapered bushing (32) made of a friction material to define a damping device (5) and mounted on said pin (9), and a second elastic element (37) axially cooperating with said tapered bushing (32) the other of said tensioning arms (3) and base (2) comprising a tubular element (22) defining a tapered seat (25) accommodating said tapered bushing (32) to define a radial centring of said tensioning arm (3) on said base (2), wherein said damping device (5) comprises a flexible wall (33) integrally connected to said tapered bushing (32) and cooperating with a wall (38) connected to said tubular element (22), said tensioner being **characterized in that** said tensioning arm (3) defines an undercut (39) between said wall (38) and said tubular element (22) to allow the flexion of said flexible wall (33).

2. A tensioner according to claim 1, **characterised in that** said tensioning arm (3) carries said tubular element (22), and **in that** said base (2) carries said pin (9).

3. A tensioner according to claim 2, **characterised in that** said base (2) comprises a first cylindrical wall (7) concentric to said pin (9), **in that** said end portion (18) comprises a second cylindrical wall (21) connected to said wall (38) concentrically to said tubular element (22), and **in that** it comprises a ring (23) manufactured from a friction material interposed between said first and second cylindrical walls (7, 21).

4. A tensioner according to claim 3, **characterised in that** said ring (23) comprises at least an edge (24) radially cooperating with one of said first and second cylindrical walls (7, 21).

5. A tensioner according to any of the preceding claims, **characterised in that** said pin (9) defines a shoulder (30), and **in that** it comprises a cover (29) abutting against said shoulder (30) and cooperating at least indirectly with said tapered bushing (32) along a direction parallel to said first axis (A).

6. A tensioner according to any of the preceding claims, **characterised in that** said second elastic element (37) is a Belleville spring.

7. A tensioner according to any of the preceding claims, **characterised in that** said tapered bushing (32) presents at least one axial end portion having an open transversal section.

8. An accessory drive for an internal combustion engine of a motor vehicle, **characterised in that** it comprises a tensioner according to any of the preceding claims and a damper pulley assembly adapted to be connected to a crankshaft of said internal combustion engine.

9. A drive according to claim 8, **characterised in that** said damper pulley hub assembly comprises a hub adapted to be connected to said crankshaft, a pulley and a spring overrurnig flexible joint for connecting said pulley to said hub.

10. A manufacturing method of a tensioner according to any of the claims from 1 to 7, **characterised in that** it comprises a step of assembling said tensioning arm (3) on said base (2), a step of positioning said base (2) on a reference plane of a machine tool, a step of machining said supporting portion (15) while said base (2) is in contact with said reference plane, and a step of assembling said idle pulley (4) on said supporting portion (15).

11. A method according to claim 10, **characterised in that** it comprises a step of injecting said tapered bushing (32) into a mould and a step of reticulating said tapered bushing (32) at a temperature from 80° to 140° inside said mould.

## Patentansprüche

1. Spanneinrichtung (1) für einen Riemenantrieb, enthaltend eine Basis (2), die dazu eingerichtet ist, an einer Haltewand gehalten zu werden, die an einer Brennkraftmaschine befestigt ist, einen Spannarm (3), der mit der Basis (2) drehbar verbunden ist und einen Halteabschnitt (15) für eine Laufriemenscheibe (4) enthält, der eine zweite Drehachse (B) für die Laufriemenscheibe (4) bildet, einen Zapfen (9) der von der Basis (2) oder dem Spannarm (3) gehalten ist und eine erste Achse (A) bildet, um die sich der Spannarm (3) dreht, und ein elastisches Element (27), das mit der Basis (2) und mit dem Spannarm (3) zusammenwirkt, um einen Riemen des Antriebs zu spannen, eine abgeschrägte Buchse (32), die aus einem Reibungsmaterial besteht, um eine Dämpfvorrichtung (5) zu bilden, und am Zapfen (9) angebracht ist, und ein zweites elastisches Element (37), das mit der abgeschrägten Buchse (32) axial zusammenwirkt, wobei das andere Element von Spannarm (3) und Basis (2) ein röhrenförmiges Element (22) umfasst, dass einen abgeschrägten Sitz (25) definiert, der die abgeschrägte Buchse (32) aufnimmt, um eine radiale Zentrierung des Spannarms (3) an der Basis (2) zu bilden, wobei die Dämpfvorrichtung (5) eine flexible Wand (33) enthält, die mit der abgeschrägten Buchse (32) integral verbunden ist und mit einer Wand (38) zusammenwirkt, die mit dem röhrenförmigen Element (22) verbunden ist, wobei die Spanneinrichtung **dadurch gekennzeichnet ist, dass** der Spannarm (3) einen Hinterschnitt (39) zwischen der Wand (38) und dem röhrenförmigen Element (22) bildet, um eine Biegung der flexiblen Wand (33) zu ermöglichen.

2. Spanneinrichtung nach Anspruch 1, **dadurch gekennzeichnet, dass** der Spannarm (3) das röhrenförmige Element (22) trägt, und **dadurch**, dass die Basis (2) den Zapfen (9) trägt.

3. Spanneinrichtung nach Anspruch 2, **dadurch gekennzeichnet, dass** die Basis (2) eine erste zylindrische Wand (7) enthält, die mit dem Zapfen konzentrisch ist, **dadurch**, dass der Endabschnitt (18) eine zweite zylindrische Wand (21) enthält, die mit der Wand (38) verbunden ist, die zum röhrenförmigen Element (22) konzentrisch ist, und **dadurch**, dass sie einen Ring (23) enthält, der aus einem Reibungsmaterial hergestellt und zwischen der ersten und der zweiten zylindrischen Wand (7, 21) angeordnet ist.

4. Spanneinrichtung nach Anspruch 3, **dadurch gekennzeichnet, dass** der Ring (23) wenigstens einen Rand (24) enthält, der mit der ersten oder der zweiten zylindrischen Wand (7, 21) radial zusammenwirkt.

5. Spanneinrichtung nach einem der vorhergehenden Ansprüche, **dadurch gekennzeichnet, dass** der Stift (9) eine Schulter (30) bildet, und **dadurch**, dass sie eine Abdeckung (29) enthält, die gegen die Schulter (30) stößt und wenigstens indirekt mit der abgeschrägten Buchse (32) entlang einer Richtung parallel zur erste Achse (A) zusammenwirkt.

6. Spanneinrichtung nach einem der vorhergehenden Ansprüche, **dadurch gekennzeichnet, dass** das zweite elastische Element (37) eine Belleville-Feder ist.

7. Spanneinrichtung nach einem der vorhergehenden Ansprüche, **dadurch gekennzeichnet, dass** die abgeschrägte Buchse (32) wenigstens einen axialen Endabschnitt aufweist, der einen geöffneten Querschnitt hat.

8. Hilfsantrieb für eine Brennkraftmaschine eines Kraftfahrzeuges, **dadurch gekennzeichnet, dass** er eine Spanneinrichtung nach einem der vorhergehenden Ansprüche und eine Dämpfungsriemenscheibenanordnung enthält, die dazu eingerichtet ist, mit einer Kurbelwelle der Brennkraftmaschine verbunden zu werden.

9. Antrieb nach Anspruch 8, **dadurch gekennzeichnet, dass** die Dämpfungsriemenscheiben-Nabenanordnung eine Nabe, die dazu eingerichtet ist, mit der Kurbelwelle verbunden zu werden, eine Riemenscheibe und eine flexible Federauflaufverbindung für die Verbindung der Riemenscheibe mit der Nabe enthält.

10. Herstellungsverfahren für eine Spanneinrichtung nach einem der vorhergehenden Ansprüche 1 bis 7, **dadurch gekennzeichnet, dass** es umfasst: einen Schritt des Anbringens des Spannarms (3) an der Basis (2), einen Schritt des Positionierens der Basis (2) auf einer Bezugsebene eines spanabhebenden Werkzeugs, einen Schritt des spanabhebenden Bearbeitens des Halteabschnittes (15), während die Basis (2) in Kontakt mit der Bezugsebene steht, und einen Schritt des Anbringens der Laufriemenscheibe (4) am Halteabschnitt (15).

11. Verfahren nach Anspruch 10, **dadurch gekennzeichnet, dass** es einen Schritt des Einspritzens der abgeschrägten Buchse (32) in eine Form und einen Schritt des Vernetzens der abgeschrägten Buchse (32) in der Form bei einer Temperatur von 80° bis 140° umfasst.

## Revendications

1. Tendeur (1) destiné à une transmission par courroie, comprenant une base (2) adaptée pour être supportée sur une paroi de support fixée à un moteur à combustion interne, un bras de tension (3) relié avec possibilité de rotation à ladite base (2) et comprenant une partie de support (15) pour une poulie folle (4) définissant un deuxième axe de rotation (B) pour ladite poulie folle (4), une broche (9) supportée par l'un de ladite base (2) et dudit bras de tension (3) et définissant un premier axe (A) autour duquel tourne ledit bras de tension (3) et un élément élastique (27) coopérant avec ladite base (2) et avec ledit bras de tension (3) pour tendre une courroie de ladite transmission, une douille tronconique (32) faite d'un matériau de friction pour définir un dispositif d'amortissement (5) et montée sur ladite broche (9), et un deuxième élément élastique (37) coopérant axialement avec ladite douille tronconique (32), l'autre dudit bras de tension (3) et de ladite base (2) comprenant un élément tubulaire (22) définissant un siège tronconique (25) recevant ladite douille tronconique (32) pour définir un centrage radial dudit bras de tension (3) sur ladite base (2), où ledit dispositif d'amortissement (5) comprend une paroi flexible (33) reliée de façon solidaire à ladite douille tronconique (32) et coopérant avec une paroi (38) reliée audit élément tubulaire (22), ledit tendeur étant **caractérisé en ce que** ledit bras de tension (3) définit un dégagement (39) entre ladite paroi (38) et ledit élément tubulaire (22) pour permettre la flexion de ladite paroi souple (33).

2. Tendeur selon la revendication 1, **caractérisé en ce que** ledit bras de tension (3) supporte ledit élément tubulaire (22) et **en ce que** ladite base (2) supporte ladite broche (9).

3. Tendeur selon la revendication 2, **caractérisé en ce que** ladite base (2) comprend une première paroi cylindrique (7) concentrique avec ladite broche (9), **en ce que** ladite partie d'extrémité (18) comprend une deuxième paroi cylindrique (21) reliée à ladite paroi (38) de façon concentrique avec ledit élément tubulaire (22) et **en ce qu'**il comprend une bague (23) fabriquée à partir d'un matériau de friction intercalé entre lesdites première et deuxième parois cylindriques (7, 21).

4. Tendeur selon la revendication 3, **caractérisé en ce que** ladite bague (23) comprend au moins un bord (24) coopérant radialement avec une desdites première et deuxième parois cylindriques (7, 21).

5. Tendeur selon l'une quelconque des revendications précédentes, **caractérisé en ce que** ladite broche (9) définit un épaulement (30) et ce qu'il comprend un capot (29) venant buter contre ledit épaulement (30) et coopérant au moins indirectement avec ladite douille tronconique (32) suivant une direction parallèle audit premier axe (A).

6. Tendeur selon l'une quelconque des revendications précédentes, **caractérisé en ce que** ledit deuxième élément élastique (37) est un ressort Belleville.

7. Tendeur selon l'une quelconque des revendications précédentes, **caractérisé en ce que** ladite douille tronconique (32) présente au moins une partie d'extrémité axiale comportant une section transversale ouverte.

8. Système d'entraînement d'accessoires pour un moteur à combustion interne d'un véhicule à moteur, **caractérisé en ce qu'**il comprend un tendeur selon l'une quelconque des revendications précédentes et un ensemble de poulie d'amortisseur adapté pour être relié à un vilebrequin dudit moteur à combustion interne.

9. Système d'entraînement selon la revendication 8, **caractérisé en ce que** ledit ensemble de moyeu de poulie d'amortisseur comprend un moyeu adapté pour être relié audit vilebrequin, une poulie et une liaison souple à prolongement de ressorts pour relier ladite poulie audit moyeu.

10. Procédé de fabrication d'un tendeur selon l'une quelconque des revendications 1 à 7, **caractérisé en ce qu'**il comprend une étape consistant à assembler ledit bras de tension (3) sur ladite base (2), une étape consistant à positionner ladite base (2) sur un plan de référence d'une machine-outil, une étape consistant à usiner ladite partie de support (15) alors que ladite base (2) est en contact avec ledit plan de référence et une étape consistant à assembler ladite poulie folle (4) sur ladite partie de support (15).

11. Procédé selon la revendication 10, **caractérisé en ce qu'**il comprend une étape consistant à injecter ladite douille tronconique (32) dans un moule et une étape consistant à réticuler ladite douille tronconique (32) à une température de 80° à 140° à l'intérieur dudit moule.
